# EUROPEAN PATENT APPLICATION

(11) **EP 2 648 477 A1**
(43) Date of publication of application: **09.10.2013**
(21) Application number: 11844612.9
(22) Date of filing: 01.12.2011
(51) Int. Cl.: H05B 6/12

(54) **INDUCTION HEATING COIL AND INDUCTION HEATING DEVICE**

(30) Priority: 02.12.2010 JP 2010268980; 02.12.2010 JP 2010268981
(71) Applicant: Panasonic Corporation, Osaka 571-8501 (JP)
(72) Inventor: SHIGEOKA, Takehiko, Osaka 540-6207 (JP); KATAOKA, Akira, Osaka 540-6207 (JP); KITAIZUMI, Takeshi, Osaka 540-6207 (JP); HAJI, Masayo, Osaka 540-6207 (JP)
(74) Representative: Schwabe - Sandmair - Marx
(86) International application number: PCT/JP2011/006743
(87) International publication number: WO 2012/073517

(57) **Abstract**

In an induction heating coil according to the present invention, in order to reduce heat losses for increasing the thermal efficiency and, also, in order to improve the heat resistance for ensuring safety, with a simple structure, a coil portion (40) for performing induction heating on an object to be heated (22) is constituted by a plurality of conductor wires (29, 37a, 37b) which are made of a metal conductor and are wound spirally in substantially the same plane, and a space portion (30, 31, 35, 36) having at least an adhesive property and an insulation property which is adapted to adhere and secure adjacent conductor wires of the plurality of conductor wires wound spirally, with predetermined spacing provided therebetween, such that the conductor wires form an integrated disk shape.

## Description

### Technical Field

The present invention relates to induction heating devices and, more particularly, relates to induction heating devices having structures which facilitate fabrication of induction heating coils capable of reducing losses and increasing thermal efficiencies.

### Background Art

In recent years, there has been wide spread use of induction heating cookers, in ordinary households, as devices which utilize induction heating as safe and clean heat sources adapted to use no fire and to generate no combustion gas. Such an induction heating cooker as an induction heating device is constituted by an induction heating coil for induction heating, a power-supply circuit adapted to supply a high-frequency electric current to the induction heating coil, a control circuit adapted to control the high-frequency electric current supplied to the induction heating coil, and the like, wherein the control circuit is provided with various types of electronic components.

The principle of heating through induction heating in such an induction heating device can be described as follows. When an AC electric current is flowed through a conductor wire, there are induced magnetic lines of flux which vary in direction and intensity, around this conductor wire. If an object (a metal, in general) which passes electricity is placed near the conductor wire, eddy currents are flowed through the metal, since the metal is influenced by the varying magnetic lines of flux. Since a metal generally has an electric resistance, when an electric current flows through the metal, Joule heat is induced, so that this metal is heated, wherein the amount of the Joule heat corresponds to the electric power, which is expressed as "the electric power = the square of the electric current x the resistance".

In an actual induction heating cooker, when an inverter portion in the power-supply circuit supplies a high-frequency electric current to an induction heating coil, the induction heating coil generates a high-frequency magnetic field. This high-frequency magnetic field is applied to an object to be heated, such as a metal pan, for example, so that this pan is caused to directly generate heat.

Such an induction heating cooker utilizes induction heating as described above and, therefore, is capable of heating a metal pan as an object to be heated, with higher thermal efficiency, in comparison with gas heating. However, the heating efficiency is varied depending on the relative permeability and the resistivity of the material of the pan. Therefore, under conditions with relatively lower thermal efficiency, there are induced increased heat losses, thereby increasing, by an amount corresponding thereto, heat generation from components such as the induction heating coil. Accordingly, in such an induction heating cooker, in order to enable stabilized heating cooking, the structure of the induction heating coil is important and, thus, various improvements have been made.

As a structure of an induction heating coil in an induction heating cooker of this type, there has been disclosed a structure which secures an induction heating coil and a coil base to a heat dissipation plate at predetermined positions through a simple method (refer to Unexamined Japanese Patent Publication No. 2005-302406 (Patent Literature 1), for example).

In a conventional induction heating cooker described in Patent Literature 1, which is illustrated in Fig. 11, a coil unit 102 placed under a top plate 101, which is for placing, thereon, a pan as an object to be heated (not illustrated), is constituted by an induction heating coil 103, ferrites 104 on which the induction heating coil 103 is placed, and a coil base 105 for holding the ferrites 104.

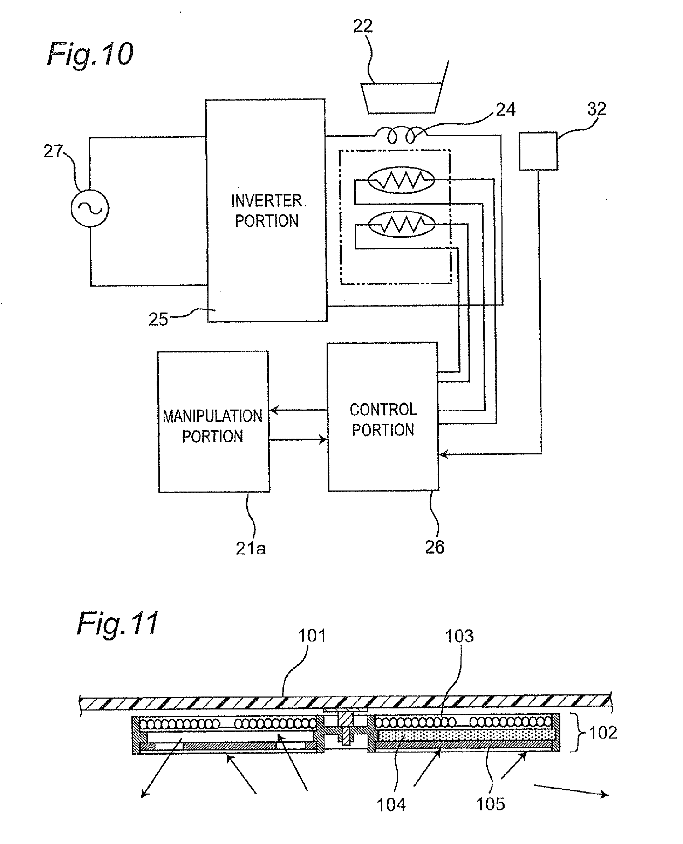

The plurality of rod-shaped ferrites 104 which are radially placed and provided on the upper-surface side of the coil base 105 are held by the coil base 105, in such a way as to be directly in contact with the lower surface of the induction heating coil 103. The conventional induction heating cooker illustrated in Fig. 11 is structured such that heat generated from the induction heating coil 103 is actively conducted to the ferrites 104 through heat conduction.

The conventional induction heating cooker illustrated in Fig. 11 is structured such that the gap between the induction heating coil 103 and the ferrites 104 is filled with a heat conduction member with higher thermal conductivity, in order to realize preferable heat dissipation from the induction heating coil 103 for cooling the induction heating coil 103.

Further, in induction heating cookers, when a high-frequency electric current flows through the conductor constituting the induction heating coil, there is induced the phenomenon that there is a higher electric current density in the surface of the conductor, while there are lower electric current densities at distances from the surface, namely the skin effect. As a result, conventional induction heating cookers have had the problem that the resistance in the induction heating coil is increased, which induces larger temperature rises, thereby degrading the heating efficiency.

Therefore, in order to realize an induction heating coil which induces less heating losses through simple and easy processes, for providing leeway in the cooling performance and the like, for eventually providing an inexpensive induction heating device, there has been suggested a structure having magnetic members inserted between electric conductors having a spiral shape in an induction heating coil (refer to Unexamined Japanese Patent Publication No. 2002-043044 (Patent Literature 2), for example).

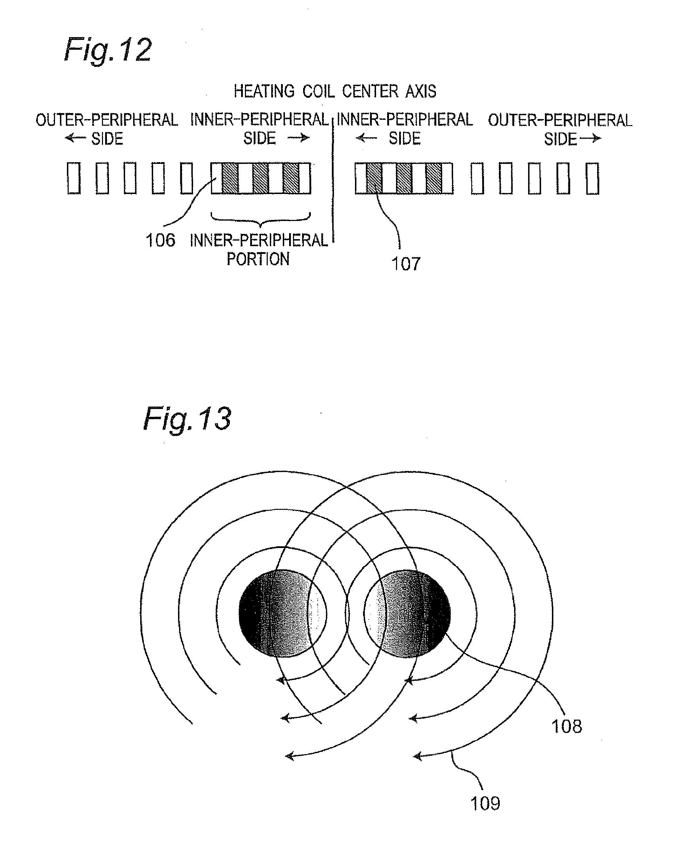

Fig. 12 illustrates a cross-sectional view of an induction heating coil in a conventional induction heating device described in Patent Literature 2. As illustrated in Fig. 12, electric conductors 106 are formed to have a spiral shape, and magnetic members 107 are inserted between the electric conductors 106, in an inner-peripheral-side portion of the electric conductors 106. Further, in a middle portion and an outer-peripheral-side portion of the electric conductors 106 having the spiral shape, there is space and, thus, there is nothing, between the electric conductors 106.

In general, when electric currents flow, in parallel with each other, through electric conductors proximal to each other, there is induced the proximity effect that each of the flows of the electric currents is obstructed by the influence of the magnetic fields generated from the other electric conductors. This proximity effect will be described in detail, with respect to a case where the electric conductors are formed from litz wires.

Fig. 13 is a cross-sectional view schematically illustrating an electromagnetic environment around coils which are proximal to each other. Fig. 13 illustrates coil wires 108 formed from electric conductors, and magnetic fluxes 109 generated from these coil wires 108. In Fig. 13, it is assumed that electric currents flow through the coil wires 108 from the front side of the paper to the rear side.

The electric currents flowing through the coil wires 108 are influenced by the magnetic fluxes 109 generated from the coil wires 108 proximal to each other, so that there is unevenness in the electric current density distribution, in the directions which get away from the coil wires 109 proximal to each other.

Referring to Fig. 13, color lightness and darkness of the coil wires 108 indicate high and low of electric current density, wherein darker portions indicate higher electric current densities. As illustrated in Fig. 13, in each of the coil wires 108 proximal to each other, the electric current density decreases with distance from the other coil wire 108. A series of phenomena which induce such unevenness in the electric-current-density distribution are generally referred to as the proximity effect. Due to the proximity effect, the resistance of the induction heating coil (particularly, the high-frequency resistance of when a high-frequency electric current is flowed therethrough) is increased, thereby increasing heat generation losses in the induction heating coil.

Among conventional induction heating cookers, in order to overcome the problem of increases of heat generation losses in induction heating coils as described above, there have been some induction heating cookers structured to have magnetic members 107 inserted between electric conductors 106, as illustrated in Fig. 12. With this structure, even though magnetic fields are induced by electric currents flowing through the electric conductors 106, and the magnetic fluxes try to influence the electric conductors 106, the magnetic fluxes act on the magnetic members 107 provided between the electric conductors 106, thereby reducing the proximity effect. This results in reduction of the resistance in the induction heating coil, thereby reducing heat generation losses in the induction heating coil.

### Citation List

### Patent Literatures

Patent Literature 1: Unexamined Japanese Patent Publication No. 2005-302406
Patent Literature 2: Unexamined Japanese Patent Publication No. 2002-043044

### Summary of Invention

### Technical Problem

The aforementioned conventional induction heating cooker illustrated in Fig. 11 is structured to thermally conduct heat from the induction heating coil 103 which is generating heat to the ferrites 104 for widely diffusing it, in order to cool the induction heating coil 103 for reducing heat losses. Therefore, in making an attempt to further reduce heat losses for increasing the thermal efficiency, there has been a need to improve the cooling ability of a fan and the like or to change the placement of the induction heating coil 103, and the like. However, the structure of the conventional induction heating cooker has had the problem that increasing the cooling ability of the fan and the like involves an increase of the size of the device and, also, involves occurrences of noises from the fan and the like. Furthermore, the structure of the conventional induction heating cooker has had the problem that there is a spatial limit to the change of the placement of the induction heating coil 3, which makes it impossible to largely improve it.

Further, the conventional induction heating coil illustrated in Fig. 12 is structured to insert the magnetic members 107 between the electric conductors 106 having the spiral shape, only in a partial area, while there is space in the other areas, which has induced the problem of difficulty of fabrication.

Particularly, working the magnetic members 107 into a spiral shape and inserting the magnetic members 107 between the electric conductors 106 having the spiral shape have been difficult processes. Further, in cases of employing powder-type magnetic members 107 and inserting them between the electric conductors 106 having the spiral shape, for fabricating the induction heating coil, since the magnetic members 207 are of such a powder type, it has been difficult to form them uniformly, due to their properties. Even if the magnetic members 107 can be uniformly formed, it is hard to maintain them at the uniformed state and, therefore, the induction heating coil has been extremely hard to fabricate.

Also, even in cases of structures having no magnetic member 107 placed between the electric conductors 106, namely structures having space between the electric conductors 106, it has been hard to maintain the size of the space at a predetermined value. Further, the magnetic members 107 basically have electrical conductivity, which has made it hard to ensure insulation between the electric conductors 106.

The present invention is made to overcome the problems in conventional induction heating devices and aims at providing an induction heating coil which is capable of reducing heat losses for increasing the thermal efficiency with a simple structure and, further, is capable of having largely improved workability for reducing the fabrication cost. Further, the present invention aims at providing an induction heating device capable of performing induction heating at higher efficiency.

### Solution to Problem

An induction heating coil used in the induction heating device according to the present invention includes:
a coil portion with a substantially-circular shape which is adapted to perform induction heating on an object to be heated; and a coil base adapted to hold the coil portion;
wherein the coil portion is constituted by a plurality of conductor wires which are made of a metal conductor and are wound spirally in substantially the same plane, and a space portion having at least an adhesive property and an insulation property which is adapted to adhere and secure adjacent conductor wires of the plurality of conductor wires wound spirally, with predetermined spacing provided therebetween, such that the coil portion forms an integrated disk shape. Further, the space portion adapted to adhere and secure the conductor wires adjacent to each other in the coil portion, to each other, includes a magnetic-substance layer made of a magnetic material, such that the magnetic-substance layer is integrally and certainly placed between the conductor wires adjacent to each other which are spirally wound.

With the induction heating coil having the aforementioned structure according to the present invention, since the space portion having an insulation property is placed between the conductor wires adjacent to each other which are spirally wound, it is possible to certainly ensure predetermined spacing therebetween. Further, since the magnetic-substance layer made of the magnetic material is formed between the conductor wires adjacent to each other, it is possible to reduce high-frequency resistances in the conductor wires which are caused by the proximity effect, due to the synergy of the effects of the magnetic-substance layer on magnetic fluxes and the effects of the gap (the insulation layer) formed by the space portion, between the conductor wires.

Further, the induction heating device according to the present invention includes:
a top plate provided in an upper surface of a main body;
a coil portion with a substantially-circular shape which is provided under the top plate and is adapted to perform induction heating on an object to be heated on the top plate;
a coil base adapted to hold the coil portion;
an inverter portion adapted to supply desired electric power to the coil portion; and
a control portion adapted to control the inverter portion;
wherein the coil portion includes a plurality of conductor wires which are made of a metal conductor and are wound spirally in substantially the same plane, and a space portion having at least an adhesive property and an insulation property which is adapted to adhere and secure adjacent conductor wires of the plurality of conductor wires wound spirally, with predetermined spacing provided therebetween, such that the coil portion forms an integrated disk shape, and the top plate and the coil portion are placed substantially in intimate contact with each other.

In the induction heating cooker having the aforementioned structure according to the present invention, the top plate and the coil portion are placed substantially in intimate contact with each other and, therefore, the coil portion is made closer to the object to be heated on the top plate, thereby providing strong coupling between the coil portion and the object to be heated. As a result, the induction heating device according to the present invention is capable of heating with higher efficiency and, further, is capable of largely reducing leakages of the electromagnetic field from the induction heating coil constituted by the coil portion and the coil base. Further, heat generated from the induction heating coil is directly conducted to the top plate to heat the top plate, to some degree, which can reduce the amount of heat absorbed by the top plate, out of heat from the object to be heated. With the synergy of these effects, in the induction heating device according to the present invention, it is possible to largely increase the efficiency of heating by the induction heating coil, thereby increasing the efficiency of the entire device.

### Advantageous Effects of Invention

Further, according to the present invention, it is possible to provide an inexpensive induction heating coil which is capable of reducing heat losses for increasing the heating efficiency with a simple structure and, also, is capable of having largely-improved workability for reducing the fabrication cost. Furthermore, it is possible to provide an induction heating device capable of induction heating with higher efficiency using the induction heating coil.

### Brief Description of Drawings

Fig. 1 is a cross-sectional view illustrating the structures of main parts in an induction heating cooker according to a first embodiment of the present invention.
Fig. 2 is an enlarged cross-sectional view of main parts in an induction heating coil for use in the induction heating cooker according to the first embodiment of the present invention.
Fig. 3 is a plan view of the induction heating cooker according to the first embodiment of the present invention.
Fig. 4 is a block diagram of control in the induction heating cooker according to the first embodiment of the present invention.
Fig. 5 is an enlarged cross-sectional view of main parts of an induction heating coil for use in an induction heating cooker according to a second embodiment of the present invention.
Fig. 6 is a cross-sectional view illustrating the structures of main parts in an induction heating cooker according to a third embodiment of the present invention.
Fig. 7 is an enlarged cross-sectional view of main parts in an induction heating coil for use in the induction heating cooker according to the third embodiment of the present invention.
Fig. 8 is a plan view of a coil portion in the induction heating coil in the induction heating cooker according to the third embodiment of the present invention.
Fig. 9 is a plan view of the induction heating cooker according to the third embodiment of the present invention.
Fig. 10 is a block diagram of control in the induction heating cooker according to the third embodiment of the present invention.
Fig. 11 is the main-part cross-sectional view illustrating the structure of the conventional induction heating cooker.
Fig. 12 is the cross-sectional view illustrating an induction heating coil in the conventional induction heating device.
Fig. 13 is the cross-sectional view schematically illustrating the electromagnetic environment around coils which are proximal to each other.

### Description of Embodiments

An induction heating coil of a first invention includes:
a coil portion with a substantially-circular shape which is adapted to perform induction heating on an object to be heated; and a coil base adapted to hold the coil portion;
wherein the coil portion is constituted by a plurality of conductor wires, which are made of a metal conductor and are wound spirally in substantially the same plane, and a space portion having at least an adhesive property and an insulation property, which is adapted to adhere and secure adjacent conductor wires of the plurality of conductor wires wound spirally so as to have a predetermined space between the adjacent conductor wires, such that the coil portion forms an integrated disk shape. With the induction heating coil having the aforementioned structure according to the first invention, since the space portion having an insulation property is placed between the conductor wires adjacent to each other which are spirally wound, it is possible to certainly ensure predetermined spacing between the conductor wires adjacent to each other, thereby reducing the high-frequency resistances in the conductor wires.

An induction heating coil of a second invention according to the first invention, wherein
the coil portion comprises the space portion having a magnetic-substance layer made of a magnetic material, such that the magnetic-substance layer is placed between the conductor wires adjacent to each other which are spirally wound. With the induction heating coil having the aforementioned structure according to the second invention, since the space portion having an insulation property is placed between the conductor wires adjacent to each other which are spirally wound and, further, the magnetic-substance layer made of the magnetic material such as a ferrite, for example, is formed between the conductor wires adjacent to each other, it is possible to reduce high-frequency resistances in the conductor wires which are caused by the proximity effect, due to the synergy of the effects of the magnetic-substance layer on magnetic fluxes and the effects of the gap (the insulation layer) formed by the space portion, between the conductor wires.

Particularly, due to the reduction of high-frequency resistances caused by the proximity effect, through the synergy of the magnetic-substance layer and the gap formed by the space portion, it is not necessary that the spacing between the conductor wires adjacent to each other be made to be larger and, also, it is not necessary that the magnetic-substance layer made of the magnetic material such as a ferrite be formed to have a larger thickness. As a result, according to the present invention, it is possible to compactly form the induction heating coil and, further, it is possible to reduce the resistance in the induction heating coil, which can reduce heat generation losses in the induction heating coil.

An induction heating coil of a third invention according to the second invention, wherein
the coil portion comprises the plurality of conductor wires wound spirally in substantially the same plane and is divided into a plurality of blocks such that the plurality of blocks are placed with a space portion interposed therebetween, assuming that a single block is an area having a plurality of turns of the conductor wires, and
in the space portions between the plurality of blocks, the plurality of conductor wires electrically connecting the plurality of blocks placed in substantially the same plane are interchanged with each other, in terms of the order in an inward and outward direction. The induction heating coil having the aforementioned structure according to the third invention is divided into a plurality of blocks in the radial direction, with the space portion provided between the plurality of blocks. This enables interchanging the plurality of conductor wires with each other, in terms of the order of them in the inward and outward direction, in the space portion between the blocks, which can prevent winding unevenness in the conductor wires, particularly protrusions of the coil portion in the thickness direction. As a result, it is possible to prevent the occurrence of defective products having coil portions floating from coil bases, and the like, and, further, it is possible to largely improve the assemblability. This enables easily and certainly fabricating the induction heating coil with higher reliability. Further, with the induction heating coil of the third invention, it is possible to interchange the directions of magnetic fields generated between the conductor wires adjacent to each other which are spirally wound, thereby reducing losses caused by the proximity effect.

An induction heating coil of a fourth invention according to any one of the first invention to the third invention, wherein
a sensor for determining a heating condition in the object to be heated is placed, in the space portion between the plurality of blocks. With the induction heating coil having the aforementioned structure according to the fourth invention, it is possible to utilize the space portion between the blocks, as a position at which various types of sensors, such as a temperature detection portion for determining the temperature of the object to be heated, can be placed, which eliminates the necessity of securing an additional portion at which the sensor is installed. Accordingly, with the fourth invention, it is possible to compactly form the induction heating coil including such a sensor, without making the induction heating coil have a larger outer diameter size.

An induction heating coil of a fifth invention according to any one of the first invention to the third invention, wherein
each of the conductor wires is formed by pressing a wire having a circular-shaped cross section, and the conductor wires are spirally wound such that flattened surfaces of the pressed conductor wires having a flattened cross-sectional shape are adjacent to each other. With the induction heating coil having the aforementioned structure according to the fifth invention, the conductor wires are prevented from being injured due to kinks and, thus, the conductor wires are made less prone to wire breaking and are easy to handle. Further, since the conductor wires have a flattened cross-sectional shape, they can be easily wound spirally into a coil shape and, thus, have largely-improved workability. Further, since the conductor wires are formed from wires with a circular cross-sectional shape which have been pressed (crushed), the conductor wires have no angular portion in their outer surfaces and, therefore, the conductor wires can be easily and smoothly wound when being spirally wound into a coil shape. In this regard, they have improved workability. If the conductor wires are constituted by angular wires, this induces the edge effect that an electric current is concentrated at edge portions to cause losses. However, with the fifth invention, the conductor wires have a flattened cross-sectional shape having no edge, which eliminates concerns about the edge effect as described above.

Further, a wire having a circular-shaped cross section which has been pressed to have a flattened cross-sectional shape has a cross-sectional area equivalent to the cross-sectional area of a litz wire constituted by a strand of a plurality of thin enamel wires. Therefore, the conductor wires according to the fifth invention have a simple structure and, also, are easy to work and, therefore, have largely-improved workability.

An induction heating coil of a sixth invention according to any one of the first invention to the third invention, wherein
the conductor wires have been subjected to insulation treatment at their outer surfaces. In the induction heating coil having this structure according to the sixth invention, the conductor wires have been subjected, at their outer surfaces, to insulation treatment with a heat-resistant varnish, for example, and, therefore, the conductor wires have smooth and slippery outer surfaces. Therefore, the conductor wires can be easily and smoothly wound and, thus, have improved workability. Further, in the induction heating coil of the sixth invention, the surfaces of the conductor wires have been treated and processed to be less prone to be injured, which inhibits the occurrence of particles from the conductor wires due to rubbing of the conductor wires. This eliminates concerns about adverse influences thereof on electric components in other portions.

An induction heating coil of a seventh invention according to any one of the first invention to the third invention, wherein
the magnetic-substance layer is formed on a surface of a heat-resistance base member, by performing coating, printing or transfer with a magnetic material on the heat-resistant base member. In the induction heating coil having this structure according to the seventh invention, the magnetic-substance layer in the space portion is formed as a thin layer on the surface of the heat-resistant base member, by performing coating, printing or transfer with the magnetic material such as a ferrite on the heat-resistant base member which is made of a glass tape or mica, for example. Therefore, the insulation layer and the magnetic-substance layer in the space portion are formed integrally with each other, which eliminates concerns about positional deviations and the like among them. Further, the induction heating coil of the seventh invention has a structure which inhibits only the magnetic-substance layer from being disengaged therefrom, even in the event of the occurrence of cracking and the like in the magnetic-substance layer, over time. This allows the insulation layer and the magnetic-substance layer to stably exert the synergy of their effects. Further, in the induction heating coil of the seventh invention, the magnetic-substance layer is formed integrally in the space portion such that it exhibits flexibility and, therefore, the magnetic-substance layer is easy to handle and can be easily wound spirally into a coil shape, thereby largely improving the workability.

An induction heating device of an eighth invention comprising:
a top plate provided in an upper surface of a main body;
a coil portion with a substantially-circular shape, which is provided under the top plate and is adapted to perform induction heating on an object to be heated on the top plate;
a coil base adapted to hold the coil portion;
an inverter portion adapted to supply desired electric power to the coil portion; and
a control portion adapted to control the inverter portion;
wherein the coil portion comprises a plurality of conductor wires which are made of a metal conductor and are wound spirally in substantially the same plane, and a space portion having at least an adhesive property and an insulation property, which is adapted to adhere and secure adjacent conductor wires of the plurality of conductor wires wound spirally so as to have a predetermined space between the adjacent conductor wires, such that the coil portion forms an integrated disk shape.

In the eighth induction heating device, the space portion having an insulation property is placed to form spacing between the conductor wires adjacent to each other which are wound spirally, which eliminates concerns about short circuits between the conductor wires adjacent to each other which are spirally wound, which induce electric potential differences therebetween. This can ensure safety against heat generation due to short circuits. Further, in the coil portion, the conductor wires adjacent to each other are adhered and secured to each other through the space portion, and the space portion is spirally wound together with the conductor wires such that they form a disk shape. This enables formation of the induction heating coil having the integrated coil portion, thereby largely improving the assemblability.

An induction heating device of a ninth invention according to the eighth invention, wherein
the top plate and the coil portion are placed substantially in intimate contact with each other. In the ninth induction heating device having the aforementioned structure, the top plate and the coil portion are placed substantially in intimate contact with each other and, therefore, the coil portion is made closer to the object to be heated on the top plate, thereby providing strong coupling between the coil portion and the object to be heated. As a result, it is possible to increase the heating efficiency and, further, it is possible to largely reduce leakages of the electromagnetic field from the induction heating coil constituted by the coil portion and the coil base. Further, heat generated from the induction heating coil is conducted to the top plate to heat the top plate to some degree, which can reduce the amount of heat absorbed by the top plate, which is the amount of heat deprived by the top plate, out of heat from the object to be heated. With the synergy of these effects, in the induction heating device according to the present invention, it is possible to largely increase the thermal efficiency of the induction heating coil. Thus, the induction heating device has higher efficiency over the entire device.

An induction heating device of a tenth invention according to the ninth invention, wherein
the space portion is formed by coating a base member of a heat-resistant tape type with a heat-curable resin with an insulation property as a binder to be formed in a semi-cured state, further placing the space portion formed in the semi-cured state adjacent to the plurality of conductor wires, further spirally winding the conductor wires and the space portion in substantially the same plane and, thereafter, heating the conductor wires for causing the space portion to be adhered to the conductor wires and to be cured, whereby the space portion has a thermal self-melting property. As described above, in the tenth invention of the induction heating device, the space portion is formed by coating the heat-curable resin having an insulation property as the binder on the base member of the heat-resistant tape-type, for example, made of glass or mica, and then by heating them so as to be adhered to the conductor wires and cured after the space portion attached to the heat-resistant tape-type base member as the object to be adhered is formed in a semi-cured state. As a result, the space portion of the induction heating device has a thermal self-melting property.

In the induction heating device having the aforementioned structure according to the tenth invention, the space portion has a thermal self-melting property as follows. That is, the space portion attached to the heat-resistant tape-type base member as the object to be adhered is formed in a semi-cured state and, thereafter, is heated to be adhered thereto and secured. Therefore, with the induction heating device of the tenth invention, the space portion is wound together with the conductor wires and, thereafter, is heated to be completely cured by a heating means, so that the conductor wires adjacent to each other which have been spirally wound are certainly secured to each other. This enables formation of the induction heating coil with high reliability. As a result, with the structure of the induction heating device of the tenth invention, it is possible to largely improve the assemblability.

Further, since the binder in the space portion is made of a heat-curable resin, the binder is prevented from being molten even when the induction heating coil is raised in temperature due to heat generation from the induction heating coil itself or by receiving heat from the object to be heated. Thus, the binder can certainly maintain its shape. Further, the rate of shrinkage and expansion of the heat-curable resin during curing can be adjusted using additives and the like, which enables finely adjusting the shape (the diameter) of the induction heating coil.

An induction heating device of eleventh invention according to the ninth invention or the tenth invention, wherein
the space portion is formed by adding a magnetic material to a binder having an adhesive property, such that the magnetic material is enwrapped by the adhesive component, whereby the space portion has a magnetic property and an insulation property. In the induction heating device having the aforementioned structure according to the eleventh invention, the space portion is formed such that the magnetic material is enwrapped by the adhesive component, whereby the space portion is provided with a magnetic property and an insulation property. Therefore, in the induction heating device of the eleventh invention, the magnetic-substance layer is certainly formed between the conductor wires adjacent to each other which are wound spirally, and, due to the synergy of the effects of the magnetic-substance layer and the effects of the gap (the insulation layer) formed by the space portion between the conductor wires, it is possible to reduce high-frequency resistances caused by the proximity effect.

Particularly, due to the reduction of high-frequency resistances caused by the proximity effect, through the synergy of the magnetic-substance layer and the insulation property of the space portion, it is not necessary that the spacing between the conductor wires adjacent to each other which are spirally wound be made to be larger. For example, it is not necessary that the magnetic-substance layer made of the magnetic material such as a ferrite be formed to have a larger thickness. As a result, with the induction heating device of the eleventh invention, it is possible to compactly form the induction heating coil and, further, it is possible to reduce the resistance in the induction heating coil, which can reduce heat generation losses in the induction heating coil.

An induction heating device of a twelfth invention comprising:
the induction heating coil according to any one of the third invention to the seventh invention;
a top plate provided in an upper surface of a main body;
an inverter portion adapted to supply desired electric power to the coil portion; and
a control portion adapted to control the inverter portion. With the induction heating device having the aforementioned structure according to the twelfth invention, it is possible to perform induction heating with higher efficiency, by using the inexpensive induction heating coil which is capable of reducing heat losses for increasing the heating efficiency with a simple structure and, also, is capable of largely improving the workability for reducing the fabrication cost.

Hereinafter, preferable embodiments of the induction heating device according to the present invention will be described, with reference to the accompanying drawings. Further, the induction heating devices according to the following embodiments will be described as being induction heating cookers, but these induction heating cookers are merely illustrative, and the induction heating device according to the present invention is not limited to such induction heating cookers and is intended to include various types of induction heating devices which utilize induction heating. Although, in the following embodiments, detailed structures of induction heating cookers will be described, the present invention is not limited to the structures according to the embodiments and is intended to cover structures based on technical concepts similar thereto.

### (First Embodiment)

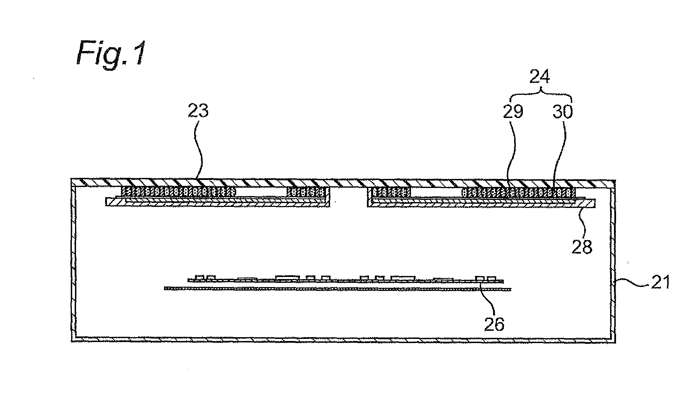

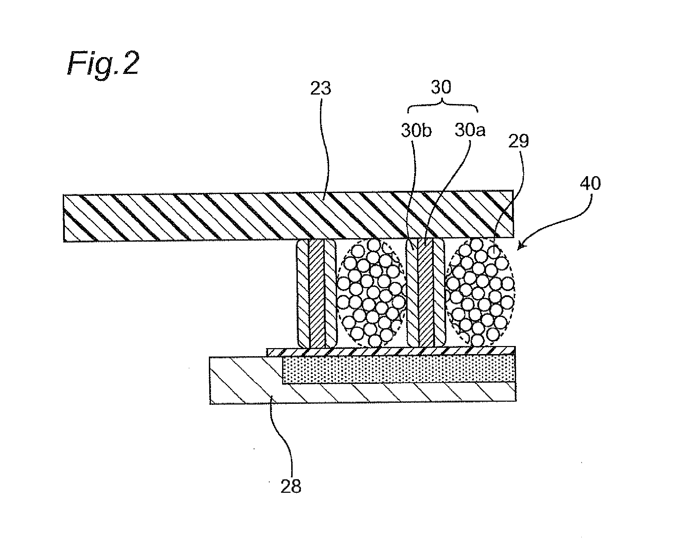

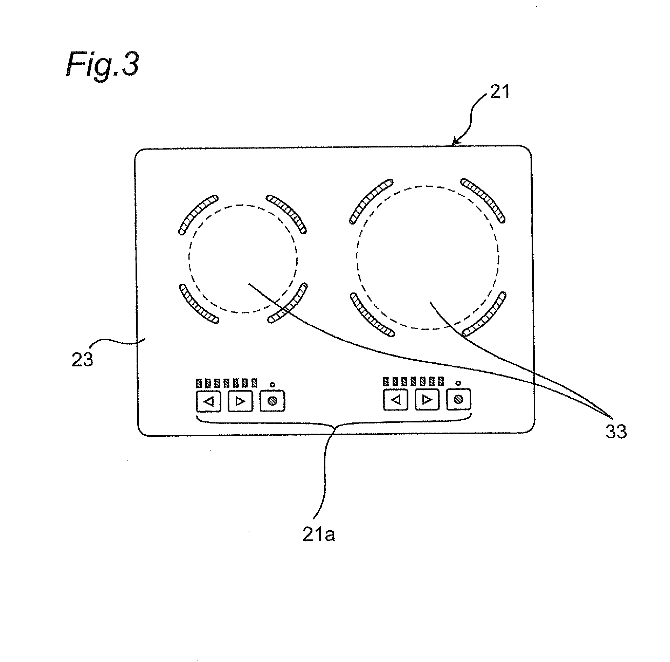

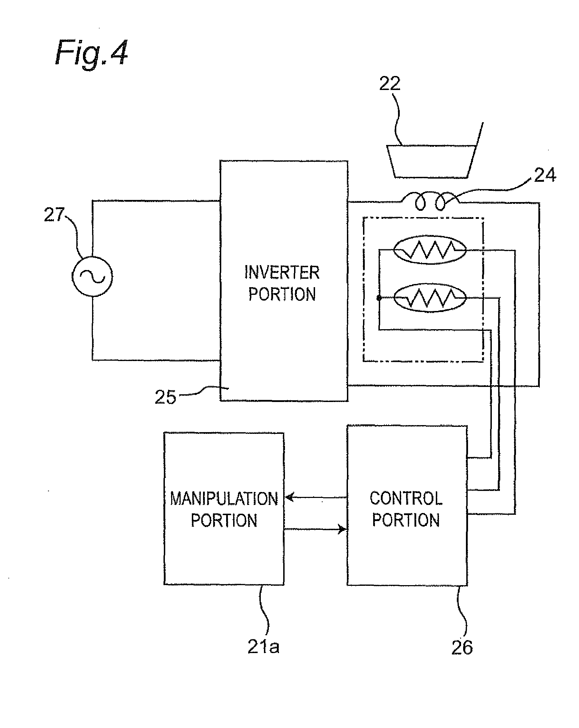

Fig. 1 is a cross-sectional view illustrating the structures of main parts in an induction heating cooker as an induction heating device according to a first embodiment of the present invention. Fig. 2 is an enlarged cross-sectional view of main parts in an induction heating coil for use in the induction heating cooker according to the first embodiment of the present invention. Fig. 3 is a plan view of the induction heating cooker according to the first embodiment of the present invention. Fig. 4 is a block diagram of control in the induction heating cooker according to the first embodiment of the present invention.

As illustrated in Figs. 1 to 4, in the induction heating cooker according to the first embodiment, a main body 21 has a top surface which is constituted by a top plate 23 for placing, thereon, a cooking container 22 to be heated (see Fig. 4), such as a pan. The top plate 23 has heating areas 33 (see Fig. 3) which specify positions at which the cooking container 22 to be heated should be placed. Further, the top plate 23 is partially provided with an operation portion 21a. Just under the top plate 23, there are placed induction heating coils 24 with substantially-circular shapes for heating the cooking container 22 to be heated, and a control portion 26 adapted to control an inverter portion 25 for operating the induction heating coils 24 and for supplying power to the induction heating coils 24. The control portion 26 is adapted to perform ON/OFF control on a switching semiconductor in the inverter portion 25 for controlling high-frequency oscillation in the inverter portion 25 and, further, is adapted to control activation and stopping of oscillation operations.

The inverter portion 25, which is one of frequency conversion devices, is structured to include a power-supply rectifier, a filter capacitor, a resonance capacitor, a switching semiconductor, and the like. The inverter portion 25 is adapted to convert a commercial power supply 27 into a high-frequency electric current and, further, is adapted to supply this high-frequency electric current to the induction heating coils 24. The induction heating coil 24 being supplied with the high-frequency electric current is caused to generate a high-frequency magnetic field around the cooking container 22 to be heated, on the top plate 23, thereby heating the bottom portion of the cooking container 22 to be heated.

The induction heating coil 24 is placed on a coil base 28 which is made of a heat-resistant resin (see Fig. 1). The coil base 28 is provided with a heat conduction member for conducting heat from the induction heating coil 24, a plurality of ferrites which are placed radially, a heat dissipation plate for downwardly dissipating heat from the heat conduction member and from the ferrites, and the like.

The induction heating coil 24 is constituted by conductor wires 29 formed from litz wires, and space portions 30 provided between the conductor wires 29 adjacent to each other, wherein these litz wires are each constituted by a strand of a plurality of fine wires which have been subjected to insulation treatment (not illustrated) with a heat-resistant varnish and the like. The space portions 30, which are for forming spacing between the conductor wires 29 adjacent to each other, are formed to have a disk shape, from a material with an insulation property and an adhesive property, which is wound in a spiral shape.

The space portions 30 have a thermal self-melting property as follows. A base member 30a made of a heat-resistant glass tape is coated with a heat-resistant silicon varnish made of a heat-curable resin with an insulation property, as a binder 30b, to form each space portion 30 in a semi-cured state. Further, the space portions 30 in the semi-cured state where they can be bent are attached to the conductor wires 29 as the objects to be adhered and, thereafter, are heated to be adhered thereto and cured, so that the space portions 30 are certainly adhered and secured to the conductor wires 29.

Further, although the first embodiment has been described with respect to an example where a tape-shaped glass tape made of heat-resistant glass is employed as the base member 30a, the material of the base member 30a can be any materials with insulation properties and, for example, a material made of mica can be employed as the base member 30a.

As a method for fabricating the induction heating coil 24, the space portions 30 are spirally wound together with the conductor wires 29 into a disk shape such that they form a heating-coil shape and, thereafter, they are heated to be completely cured, through a heating means. Since the space portions 30 are cured as described above, the conductor wires 29 adjacent to each other which have been spirally wound are certainly adhered and secured to each other, thereby integrating the induction heating coil 24. The integrated induction heating coil 24 is structured such that it can be handled solely and is placed on the coil base 28.

Further, as the heating means for heating the space portions 30, it is also possible to utilize heat generated from the induction heating coil 24 itself, by supplying electricity to the induction heating coil 24. It is also possible to fabricate the induction heating coil 24, by introducing the induction-heating-coil material with a predetermined shape into an electric furnace which is capable of raising it to a predetermined temperature and maintaining it at this temperature and, further, by heating the induction-heating-coil material to a predetermined temperature.

In the induction heating cooker according to the first embodiment, the coil portion 40 (the conductor wires 29) of the induction heating coil 24 is placed such that it is substantially in intimate contact with the top plate 23. With this structure, the cooking container 22 to be heated, which is placed on the top plate 23, can be made as close to the induction heating coil 24 as possible, thereby providing strong coupling between the induction heating coil 24 and the cooking container 22 to be heated.

Next, the induction heating cooker having the aforementioned structure according to the first embodiment will be described with respect to operations and effects thereof.

In the induction heating cooker according to the first embodiment, the cooking container 22 to be heated, such as a pan, is placed on the top plate 23 placed in the top surface of the main body 21, and a user makes settings of desired heating conditions by operating the operation portion 21a. After the settings of the heating conditions have been made, if a manipulation for starting heating is performed, a heating operation is started. After the start of the heating operation, the control portion 26 activates the inverter portion 25 for supplying a high-frequency electric current to the induction heating coil 24, which causes the induction heating coil 24 to generate a high-frequency magnetic field around the cooking container 22 to be heated, thereby heating the bottom portion of the cooking container 22 to be heated.

In the induction heating cooker according to the first embodiment, the top plate 23 and the induction heating coil 24 are placed such that they are substantially in intimate contact with each other and, therefore, the cooking container 22 to be heated, which is on the top plate 23, is close to the induction heating coil 24, thereby providing strong coupling between the induction heating coil 24 and the cooking container 22 to be heated. The induction heating cooker having this structure according to the first embodiment is enabled to have an increased heating efficiency and, further, can largely reduce leakages of the electromagnetic field from the induction heating coil 24. Further, heat generated from the induction heating coil 24 is conducted to the top plate 23 to heat the top plate 23, which can reduce the amount of heat absorbed by the top plate 23, which is the amount of heat deprived by the top plate 23, out of heat from the cooking container 22 to be heated. With the synergy of these effects, in the induction heating cooker according to the first embodiment, it is possible to largely increase the efficiency of heating by the induction heating coil 24.

Further, in the induction heating cooker according to the first embodiment, the space portions 30 having an insulation property are placed to form spacing between the conductor wires 29 adjacent to each other which are wound spirally, which eliminates concerns about short circuits between the conductor wires 29 adjacent to each other which induce electric potential differences therebetween, thereby ensuring safety against heat generation due to short circuits.

Further, in the induction heating cooker according to the first embodiment, in the induction heating coil 24, the conductor wires 29 adjacent to each other are certainly secured to each other through the space portions 30. Therefore, by spirally winding the conductor wires 29 and the space portions 30 together with each other such that they form a disk shape, it is possible to easily and certainly form the integrated induction heating coil 24 having a desired shape, which can largely improve the assemblability.

Further, in the induction heating cooker according to the first embodiment, the space portions 30 are made of a material with a thermal self-melting property which is attached to objects to be adhered in a semi-cured state and, then, is heated to be adhered thereto and cured. Therefore, by winding the space portions 30 together with the conductor wires 29 into the shape of the induction heating coil 24 and, thereafter, by heating them for completely curing them with a heating means, it is possible to easily fabricate the induction heating coil 24 having a desired shape and a desired structure, wherein the conductor wires 29 adjacent to each other which are spirally wound are certainly secured to each other with predetermined spacing interposed therebetween. As a result, the induction heating coil 24 in the induction heating cooker according to the first embodiment has largely-improved assemblability.

Further, a heat-curable resin is employed as the binder 30b in the space portions 30, which prevents the binder 30b from being molten even when the induction heating coil 24 is raised in temperature due to heat generation from itself or by receiving heat from the cooking container 22 to be heated. Thus, the binder 30b is adapted to have higher reliability and to certainly maintain a desired shape. Further, the rate of shrinkage and expansion of the heat-curable resin as the binder 30b during curing can be adjusted using additives and the like, which enables finely adjusting the shape of the induction heating coil 24, such as the diameter, for example.

Further, in the induction heating cooker according to the first embodiment, the conductor wires 29 can be subjected, at their outer surfaces, to insulation treatment using a heat-resistant varnish and the like. By applying such insulation treatment to the outer surfaces of the conductor wires 29, it is possible to smoothen the outer surfaces of the conductor wires 29, which facilitates smoothly winding the conductor wires 29, thereby causing them to have excellent workability. Furthermore, the conductor wires 29 are made less prone to be injured at their surfaces, which prevents the occurrence of particles from the conductor wires 29 due to scrapes of the conductor wires 29. This prevents the induction heating coil 24 from exerting adverse influences on electric components in other parts, so that the induction heating coil 24 has high reliability.

As described above, the induction heating cooker according to the first embodiment of the present invention is capable of reducing heat losses to increase the thermal efficiency and, further, is capable of improving the heat resistance of the induction heating coil for ensuring safety, with a simple structure.

### (Second Embodiment)

An induction heating cooker as an induction heating device according to a second embodiment of the present invention will be described hereinafter. The induction heating cooker according to the second embodiment is different from the induction heating cooker according to the aforementioned first embodiment, in terms of the structure of space portions, but the other structures are the same as those of the induction heating cooker according to the first embodiment.

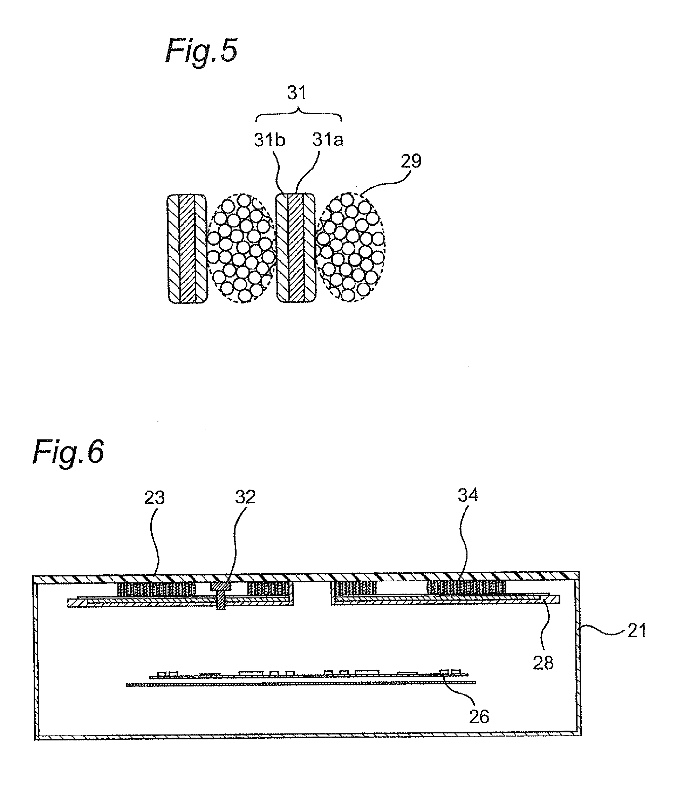

In the following description about the induction heating cooker according to the second embodiment, components having the same functions and structures as those of the components in the induction heating cooker according to the first embodiment will be designated by the same reference characters, and the description about the first embodiment will be substituted for detailed description thereof. Fig. 5 is an enlarged cross-sectional view of main parts of an induction heating coil for use in the induction heating cooker according to the second embodiment of the present invention.

In the induction heating cooker according to the second embodiment, the space portions 31 are constituted by a base member 31a made of heat-resistant glass tape, and a binder 31b which is formed from a heat-resistant silicon varnish made of a heat-curable resin with an adhesive property, and from a magnetic material added thereto, such that the base member 31a is coated with the binder 31b. The binder 31 b is formed such that the magnetic material is enwrapped by the heat-resistant silicon varnish made of the heat-curable resin as the adhesive component, so that the binder 31 b is provided with a magnetic property and an insulation property.

Further, although the second embodiment has been described with respect to an example where a tape-shaped glass tape made of heat-resistant glass is employed as the base member 31a, a material made of mica can be also employed as the base member 31a.

As described above, the binder 31 b in the space portions 31 is formed such that the magnetic material is enwrapped by the adhesive component and the binder 31b is provided with a magnetic property and an insulation property, so that magnetic-substance layers and predetermined spacing (insulation layers) are formed between conductor wires 29 adjacent to each other which are wound spirally. As described above, the induction heating coil 24 is provided with the space portions 31, so that the insulation layers and the magnetic-substance layers are formed in the gaps between the conductor wires 29, and the synergy of their effects can reduce high-frequency resistances caused by the proximity effect.

Particularly, due to the reduction of high-frequency resistances caused by the proximity effect, through the synergy of the insulation layers and the magnetic-substance layers in the space portions 31, it is possible to eliminate the necessity of providing larger spacing between the conductor wires 29 adjacent to each other which are spirally wound and, furthermore, it is possible to eliminate the necessity of forming the magnetic-substance layers containing the magnetic material such as a ferrite for forming the magnetic-substance layers, such that these magnetic-substance layers have larger thicknesses. As a result, it is possible to compactly form the induction heating coil 24. According to the second embodiment having the aforementioned structure, as a result, it is possible to reduce the resistance in the induction heating coil 24, which can reduce heat generation losses in the induction heating coil 24.

Further, the second embodiment has been described with respect to an example where the binder 31b in the space portions 31 is fabricated by mixing the magnetic material in the heat-curable resin such that the binder 31b is provided with a magnetic property, a thermal self-melting property and an insulation property at the same time. However, the present invention is not limited to this example, and, for example, the binder 31b can be fabricated in such a way as to be provided with a thermal self-melting property and an insulation property at a later time through different means.

By fabricating the binder 31 b in the space portions 31 in such a way as to provide it with a thermal self-melting property and an insulation property at a later time through different means, it is possible to provide the advantage of simplification of the working processes while increasing the number of processes and, further, it is possible to provide the advantage of simplification of management and the like for certainly providing it with a thermal self-melting property and an insulation property.

Further, although the metal conductors used in the induction heating coil 24 have been described as being constituted by litz wires each formed from a plurality of fine wires, they can be also constituted by ribbon-type conductor wires formed by shaping metal conductor sheets such as copper sheets or aluminum sheets into ribbon shapes. Further, as such metal conductors, it is possible to employ circular-shaped wires with larger diameters and, also, it is possible to employ such wires which are crushed to have flattened cross sections.

In cases of employing such wires as the metal conductors in the induction heating coil 24, the cross-sectional area of a single wire corresponds to the cross-sectional area of a litz wire constituted by a strand of a plurality of thin enamel wires, and it is possible to eliminate concerns about hitching and breaking of a plurality of fine wires. Further, in cases of employing such wires in the induction heating coil 24, it is possible to largely improve the workability with a simple structure and, further, it is possible to largely reduce the working cost for the wires, thereby reducing the costs, since the wires have a larger thickness.

The structure according to the second embodiment has been described with respect to an example where the space portions 31 are fabricated by coating the heat-resistant tape-shaped base member 31a made of glass with the binder 31b formed from a heat-resistant silicon varnish made of a heat-curable resin with an adhesive property and an insulation property, and a magnetic material mixed therein. However, it is also possible to employ other structures. For example, by employing, as metal conductors, ribbon-type conductor wires formed by shaping metal conductor sheets such as copper sheets or aluminum sheets into ribbon shapes, circular-shaped wires with larger diameters, or such circular-shaped wires having been crushed to have flattened cross sections, it is possible to directly coat the surfaces of these wire members with a binder which is formed from a heat-resistant silicon varnish made of a heat-curable resin with an adhesive property and an insulation property, and a magnetic material mixed therein, in order to eliminate the necessity of providing the base member in the space portions. With this structure, it is possible to eliminate the necessity of providing the base member in the space portions, which enables forming the induction heating coil 24 with lower costs and simplifying the working processes therefore, thereby largely improving the productivity.

As described above, the induction heating cooker according to the second embodiment of the present invention is adapted to reduce heat losses to increase the thermal efficiency with a simple structure and, further, is adapted to improve the heat resistance of the induction heating coil for ensuring safety.

Accordingly, in the induction heating cooker according to the second embodiment of the present invention, the top plate and the induction heating coil are placed such that they are substantially in intimate contact with each other, which can realize a structure for largely reducing leakages of the electromagnetic field and, also, can largely increase the thermal efficiency of the induction heating coil. Further, in the induction heating cooker according to the present invention, the space portions having an insulation property and an adhesive property are placed between the conductors in the induction heating coil, which certainly prevents short circuits between the conductors adjacent to each other and, also, largely improves the assemblability.

### (Third Embodiment)

An induction heating cooker as an induction heating device according to a third embodiment of the present invention will be described hereinafter. The induction heating cooker according to the third embodiment is different from the induction heating cooker according to the aforementioned first embodiment, in terms of the structure of an induction heating coil, but the other structures are the same as those of the induction heating cooker according to the first embodiment.

In the following description about the induction heating cooker according to the third embodiment, components having the same functions and structures as those of the components in the induction heating cooker according to the first embodiment will be designated by the same reference characters, and the description about the first embodiment will be substituted for detailed description thereof.

As described in the section of the background art which has been described above, when a high-frequency electric current flows through the conductors constituting the induction heating coil, there is induced the phenomenon that there is a higher electric current density in the surfaces of the conductors, while there are lower electric current densities at distances from the surfaces, namely the skin effect, which increases the resistance and, thus, induces larger temperature rises, thereby inducing the problem of reduction of the efficiency in the induction heating cooker.

As a countermeasure for overcoming this problem, there is a method which subdivides the conductors in the induction heating coil for causing the conductors to have larger surface areas. Accordingly, in order to make the conductor surface areas larger, the induction heating coil is formed by spirally winding litz wires each constituted by a strand of a plurality of thin enamel wires.

However, such litz wires are constituted by wires each having a smaller thickness. Therefore, during fabrication of the induction heating coil, the litz wires are prone to damage, such as kinks, injuries and wire breaking, due to hitching and the like, which induces the problem that these litz wires are required to be carefully handled. Further, since the respective wires constituting such litz wires have been subjected to enamel treatment for insulation, which has induced cost increases.

Therefore, the induction heating device according to the third embodiment of the present invention is structured to employ wires, instead of litz wires, as the conductors in the induction heating coil. Hereinafter, an induction heating cooker will be described as the induction heating device according to the third embodiment and, particularly, an induction heating coil having conductors constituted by wires having a different structure from that in the other embodiments will be described.

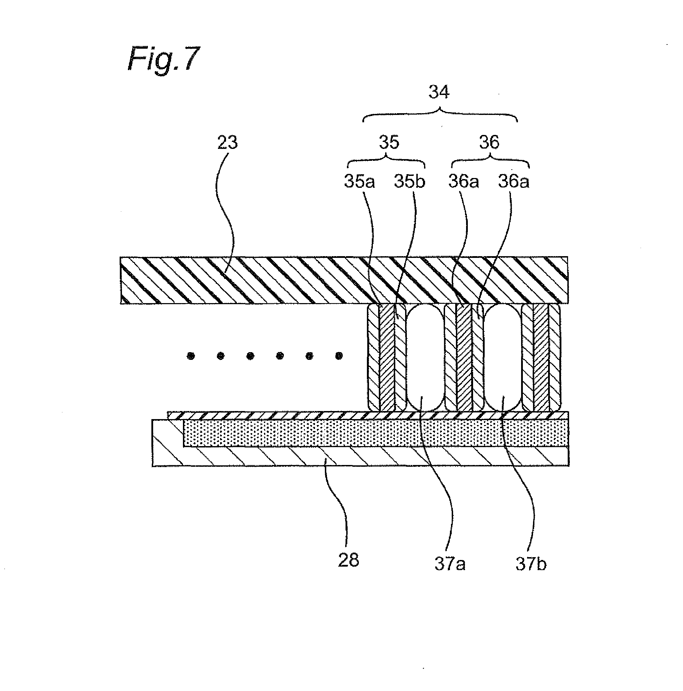

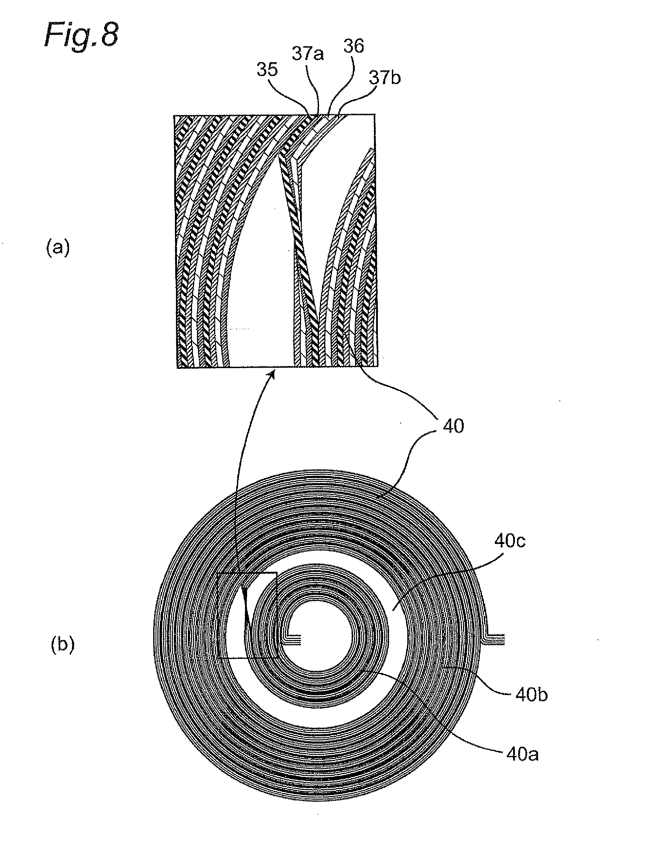

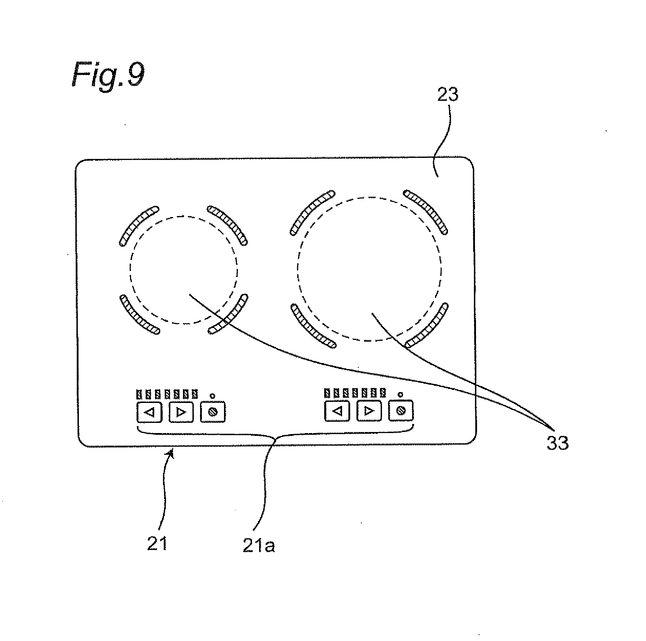

Fig. 6 is a cross-sectional view illustrating the structures of main parts in the induction heating cooker according to the third embodiment of the present invention. Fig. 7 is an enlarged cross-sectional view of main parts in the induction heating coil for use in the induction heating cooker according to the third embodiment of the present invention. Fig. 8 is a plan view of a coil portion in the induction heating coil in the induction heating cooker according to the third embodiment of the present invention. Fig. 9 is a plan view of the induction heating cooker according to the third embodiment of the present invention. Fig. 10 is a block diagram of control in the induction heating cooker according to the third embodiment of the present invention.

As illustrated in Figs. 6 to 10, in the induction heating cooker according to the third embodiment, a main body 21 has a top surface which is constituted by a top plate 23 for placing, thereon, a cooking container 22 to be heated, such as a pan. The top plate 23 has heating areas 33 (see Fig. 9) which specify positions at which the cooking container 22 to be heated should be placed. Further, the top plate 23 is partially provided with an operation portion 21a. Just under the top plate 23, there are placed induction heating coils 34 with substantially-circular shapes for heating the cooking container 22 to be heated, and a control portion 26 adapted to control an inverter portion 25 for operating the induction heating coils 34 and for supplying power supply to the induction heating coils 34. The control portion 26 is adapted to perform ON/OFF control on a switching semiconductor in the inverter portion 25 for controlling high-frequency oscillation in the inverter portion 25 and to control activation and stopping of oscillation operations.

In the induction heating cooker according to the third embodiment, there is provided a temperature detection portion (temperature sensor) 32 which is adapted to detect the temperature of the cooking container 22 to be heated, on the top plate 23, during cooking, and to output a signal indicative of the detected temperature to a control portion 26. The temperature detection portion 32 is placed between an inner block 40a and an outer block 40b in order to detect the temperature of the bottom portion of the cooking container 22 to be heated, wherein the inner block 40a is an inner peripheral side of the coil portion 40 of the induction heating coil 34, while the outer block 40b is an outer peripheral side of the coil portion 40, as will be described later.

The inverter portion 25, which is one of frequency conversion devices, is structured to include a power-supply rectifier, a filter capacitor, a resonance capacitor, a switching semiconductor, and the like. The inverter portion 25 is adapted to convert a commercial power supply 27 into a high-frequency electric current and to supply this high-frequency electric current to the induction heating coil 34. The induction heating coil 34 being supplied with the high-frequency electric current is caused to generate a high-frequency magnetic field around the cooking container 22 to be heated, on the top plate 23, thereby heating the cooking container 22 to be heated.

The induction heating coil 34 is placed on a coil base 28 which is made of a heat-resistant resin. The coil base 28 is provided with a heat conduction member for conducting heat from the induction heating coil 34, a plurality of ferrites which are placed radially, a heat dissipation plate for downwardly dissipating heat from the ferrites, and the like.

Further, in the third embodiment, the induction heating coil 34 employs, as a pair of conductor wires 37a and 37b, two wires formed from circular-shaped wires having been pressed (crushed) to have flattened cross-sectional shapes. In the induction heating coil 34, the coil portion 40 is formed, using the two conductor wires 37a and 37b, by spirally winding them such that their flattened surfaces are adjacent to each other. Further, in the coil portion 40 of the induction heating coil 34, space portions 35 and 36 having lower dielectric losses and higher heat resistance are placed adjacent to the conductor wires 37a and 37b, respectively, such that they are paired with the conductor wires 37a and 37b adjacent to each other which are spirally wound. Accordingly, the coil portion 40 of the induction heating coil 34 is formed such that the two conductor wires 37a and 37b and the space portions 35 and 36 are wound together with each other, and the space portions 35 and 36 are inserted between the conductor wires 37a and 37b adjacent to each other, with spacing provided therebetween.

In the third embodiment, the space portions 35 and 36 are constituted by binders 35b and 36b, and base members 35a and 36a which are coated with the binders 35b and 36b. The binders 35b and 36b are formed from a heat-resistant silicon varnish (not illustrated) made of a heat-curable resin, for example, which contains an adhesive component and has an insulation property, with a magnetic material (not illustrated) such as a ferrite which is mixed therein. The space portions 35 and 36, which are formed from the binders 35b and 36b formed as described above, and the tape-shaped base members 35a and 35a made of heat-resistant glass which are coated with the binders 35a and 36b, are in a semi-cured state and a state easy to handle where they can be bent. The space portions 35 and 36 in such a semi-cured state where they can be bent have a thermal self-melting property as follows. After being attached to objects to be adhered, if the space portions 35 and 36 are heated, they are adhered thereto and cured, so that the objects to be adhered are secured to each other. Accordingly, in the induction heating coil 34 according to the third embodiment, the conductor wires 37a and 37b and the space portions 35 and 36 are wound together with each other into a spiral shape, and the space portions 35 and 36 are placed between the conductor wires 37a and 37b adjacent to each other, so that there are formed insulation layers and magnetic-substance layers.

Further, although the third embodiment has been described with respect to an example where tape-shaped base member 35a and 36a made of heat-resistant glass are employed, a material made of mica can be also employed as the base members 35a and 36a.

Further, as illustrated in Fig. 8, the coil portion 40 in the induction heating coil 34 according to the third embodiment is structured to be divided into two blocks separated in a radial direction, which are the inner block 40a and the outer block 40b, wherein a single block is defined as an area having a plurality of turns (a number of windings) which are wound in a spiral shape to be integrated. The coil portion 40 is provided with a space portion 40c having a predetermined length, between the inner block 40a and the outer block 40b.

In Fig. 8, (a) is an enlarged view of main parts in the coil portion 40, and (b) is a plan view illustrating the coil portion 40 constituted by the inner block 40a and the outer block 40b. Further, (a) of Fig. 8 is a schematic view illustrating, in an enlarging manner, a part of the coil portion 40 enclosed with a rectangle in (b) of Fig. 8. As illustrated in Fig. 8, in the space portion 40c between the inner block 40a and the outer block 40b which are wound and juxtaposed in the horizontal direction, the conductor wires 37a and 37b and the space portions 35 and 36 are interchanged, in terms of the order of them in the inward and outward direction.

Further, in the induction heating cooker according to the third embodiment, in the space portion 40c between the inner block 40a and the outer block 40b, there is placed the temperature detection portion 32 for determining the temperature of the cooking container 22 to be heated, and the like, through the top plate 23.

The binder portions 35b and 36b, which form the magnetic-substance layers in the coil portion 40 in the induction heating coil 34, contain an adhesive component and a magnetic material such as a ferrite, such that the magnetic material is enwrapped by the adhesive component (not illustrated), and the binder portions 35b and 36b is provided with an insulation property. Further, the conductor wires 37a and 37b in the induction heating coil 34 have been subjected, at their surfaces, to insulation treatment with a heat-resistant varnish and the like.

Next, the induction heating coil 34 having the aforementioned structure and the induction heating cooker employing this induction heating coil 34 will be described with respect to operations and effects thereof.

In the induction heating cooker according to the third embodiment, the cooking container 22 to be heated, such as a pan, is placed on the top plate 23 placed in the top surface of the main body 21, and a user makes settings of desired heating conditions by operating the operation portion 21a. After the settings of the heating conditions have been made, if a manipulation for starting heating is performed, a heating operation is started. After the start of the heating operation, the control portion 26 activates the inverter portion 25 for supplying a high-frequency electric current to the induction heating coil 34, which causes the induction heating coil 34 to generate a high-frequency magnetic field around the cooking container 22 to be heated, thereby heating the bottom portion of the cooking container 22 to be heated.

In the coil portion 40 of the induction heating coil 34 in the induction heating cooker according to the third embodiment, the space portions 35 and 36 having an insulation property are placed between the conductor wires 37a and 37b adjacent to each other which are spirally wound, thereby certainly ensuring insulation between the conductor wires 37a and 37b adjacent to each other with predetermined spacing interposed therebetween. Further, in the coil portion 40 in the induction heating coil 34, there are formed the magnetic-substance layers made of the magnetic material, which is a ferrite or the like, using the binders 35b and 36b in the space portions 35 and 36, between the conductor wires 37a and 37b adjacent to each other which are spirally wound. Therefore, the coil portion 40 in the induction heating coil 34 according to the third embodiment is structured to be provided with the space portions 35 and 36, which offers the advantage of certainly reducing high-frequency resistances caused by the proximity effect, due to the synergy of the effects of the gaps (the insulation layers) formed between the conductor wires 37a and 37b and the effects of magnetic fluxes on the magnetic-substance layers in the space portions 35 and 36.

Particularly, for the reduction of high-frequency resistances caused by the proximity effect, the magnetic-substance layers and predetermined spacing are formed by the space portions 35 and 36, between the conductor wires 37a and 37b. Further, due to the synergy of the effects of them, it is not necessary that the spacing between the conductor wires 37a and 37b adjacent to each other which are spirally wound be made to be larger and, also, it is not necessary that the magnetic-substance layers containing the magnetic material such as a ferrite for forming the magnetic-substance layers be formed to have larger thicknesses. It was revealed from experiments that setting the spacing formed by the space portions 35 and 35 to be about 0.2 to 0.5 mm ensured sufficient insulation and provided preferable results. Further, there is no need for forming the magnetic-substance layers containing the magnetic material such as a ferrite such that they have larger thicknesses. Thus, it was revealed from experiments that magnetic-substance layers having thicknesses of about 10 micrometers provided preferable results. In the structure according to the third embodiment, due to the use of the space portions 35 and 36, eventually, it is possible to compactly form the induction heating coil 34. According to the third embodiment having the aforementioned structure, as a result, it is possible to reduce the resistance in the coil portion 40 in the induction heating coil 34, thereby reducing heat generation losses in the induction heating coil 34.

Since there is no need for forming the magnetic-substance layers in the space portions 35 and 36 such that they have larger thicknesses, as described above, it is possible to easily form the magnetic material such as a ferrite on the surfaces of the base members and the like, through coating, printing, transfer and the like. Further, since the magnetic-substance layers have smaller thicknesses, they can be made bendable and, thus, can be easily wound spirally into a coil shape, thereby largely improving the workability.

Further, in the induction heating cooker according to the third embodiment, the coil portion 40 in the induction heating coil 34 is structured such that the plurality of conductor wires 37a and 37b arranged in the horizontal direction are interchanged with each other, in terms of the order of them in the inward and outward direction, in the space portion 40c between the inner block 40a and the outer block 40b. Therefore, in the coil portion 40 in the induction heating coil 34, it is possible to interchange the directions of magnetic fields generated between the conductor wires 37a and 37b adjacent to each other which are spirally wound, thereby reducing losses caused by the proximity effect.

Further, the coil portion 40 in the induction heating coil 34 is divided into two parts in the radial direction, thereby forming the inner block 40a and the outer block 40b with the space portion 40c provided between the blocks. This enables interchanging the plurality of conductor wires 37a and 37b with each other, in terms of the order of them in the inward and outward direction, in the space portion 40c between the blocks. With the coil portion 40 in the induction heating coil 34 having this structure, it is possible to prevent winding unevenness, particularly protrusions of the conductor wires 37a and 37b in the thickness direction (in the upward and downward direction), thereby preventing the coil portion 40 in the induction heating coil 34 from floating and the like from the coil base 28. As a result, the induction heating cooker according to the third embodiment can have the advantage of improved assemblablity.

Further, the induction heating coil 34 is structured to provide a sensor such as the temperature detection portion 32 for determining the temperature of the cooking container 22 to be heated, in the space portion 40c provided between the blocks, which can secure the portion at which the temperature detection portion 32 as the sensor is installed. This enables compactly forming the heating coil 24, without making the heating coil 24 have a larger outer diameter, and without securing an additional portion at which the sensor is installed.

Further, in the induction heating coil 34, the conductor wires 37a and 37b in the induction heating coil 34 are constituted by circular-shaped wires having been crushed (pressed) to have a flattened cross-sectional shape and, further, the conductor wires 37a and 37b are spirally wound and placed oppositely to each other such that their flattened surfaces are adjacent to each other. The conductor wires 37a and 37b formed as described above are structured to be less prone to kinks, injuries and wire breaking, unlike litz wires. Therefore, the induction heating coil 34 can be easily wound spirally into a coil shape and, thus, has largely improved workability, since the induction heating coil 34 is easy to handle and has a flattened rectangular cross-sectional shape.

Further, since the conductor wires 37a and 37b are formed from circular-shaped wires having been crushed, the conductor wires 37a and 37b have no angular portion in their outer surfaces and, therefore, can be easily and smoothly wound, when being spirally wound into a coil shape. Thus, they have excellent workability. If the conductor wires are constituted by angular wires having edges in their cross sections, this induces the edge effect that an electric current is concentrated at these edge portions to cause losses. However, in the case of the conductor wires 37a and 37b formed from such circular-shaped wires having been crushed, it is possible to eliminate concerns about the edge effect.

Each of the conductor wires 37a and 37b, which is constituted by such a circular-shaped wire having been crushed (pressed) to have a flattened cross-sectional shape, has a cross-sectional area equivalent to the cross-sectional area of a litz wire constituted by a strand of a plurality of thin enamel wires. Therefore, these conductor wires 37a and 37b are materials which are extremely easy to handle, in comparison with litz wires. Since the conductor wires 37a and 37b each formed from a single wire are used in the coil portion 40, it is possible to eliminate concerns about hitching and breaking of a plurality of thin wires, thereby largely improving the workability, with a simple structure. Furthermore, it is possible to largely reduce the working costs for the conductor wires, thereby reducing the cost.

For example, a litz wire constituted by a bundle of 34 wires with a diameter of 0.3 mm has a cross-sectional area of 2.40 mm², while a circular-shaped wire having a diameter of 1.8 mm has an area of 2.54 mm² and, thus, mathematically has a cross-sectional area equal to or more than that of the aforementioned litz wire. By crushing this circular-shaped wire such that it has a flattened shape with a thickness of 0.8 mm, for example, it is possible to easily increase the cross-sectional area of the conductor wire, without increasing the diameter of the coil portion 40.

As described above, in the structure of the induction heating coil 34 according to the third embodiment, by increasing the diameter of the circular-shaped wires used as the conductors 37a and 37b, it is possible to increase the cross-sectional area of the conductors 37a and 37b. With this structure, it is possible to reduce the DC resistance values possessed by the conductor wires 37a and 37b themselves. In this case, the actual DC resistance value possessed by the conductor wires 37a and 37b are varied depending on the amounts of deformations, working conditions and the like. When these wires have been crushed into a flattened shape, they have been lengthened by about 10 to 20 percents and have been reduced in cross-sectional area. Thus, it is preferable to consider selecting circular-shaped wires having a larger diameter, as circular-shaped wires for use as the conductor wires 37a and 37b.

Ordinary induction heating cookers utilize frequencies of about 25 kHz (for example, 24.5 kHz). At frequencies of 20 kHz to 100 kHz, the skin depth, which indicates the depth of electric-current flows due to the skin effect, is 0.467 mm at 20 kHz and, further, is 0.209 mm at 100 kHz, in the case where the material is copper. Further, in the third embodiment, the wires crushed into a flattened shape, which are used as the conductor wires 37a and 37b, have thicknesses of 0.42 to 0.93 mm or less. Accordingly, the conductor wires 37a and 37b have a shape which is less prone to be influenced by the skin effect.

As described above, the material of the conductor wires 37a and 37b, and the thickness of the conductor wires 37a and 37b after being crushed into a flattened shape are determined, based on the skin depth which indicates the depth of electric-current flows due to the skin effect at the frequencies to be used. At the same time, in consideration of the amount of increase of high-frequency resistances due to the proximity effect, it is preferable to determine the width and the number of the conductor wires 37a and 37b, based on the resistance components required in the conductor wires 37a and 37b, namely the required cross-sectional areas of the conductor wires 37a and 37b.

In the structure of the induction heating coil 34 according to the third embodiment, the conductor wires 37a and 37b have been subjected, at their outer surfaces, to insulation treatment with a heat-resistant varnish and the like and, therefore, the conductor wires 37a and 37b are slippery at their outer surfaces, therefore can be smoothly wound and, thus, have excellent workability. Further, the surfaces of the conductor wires 37a and 37b are less prone to be injured, which inhibits the occurrence of particles from the conductor wires 37a and 37b due to rubbing of the conductor wires 37a and 37b. This eliminates concerns about adverse influences of particles from the conductor wires 37a and 37b on other parts, such as electric components in the control portion 26.

Further, in the structure of the induction heating coil 34 according to the third embodiment, the space portions 35 and 36 are formed from the base members 35a and 35b made of heat-resistant glass tapes and the binders 35b and 36b which are formed from a heat-resistant silicon varnish made of a heat-curable resin containing an adhesive component and having an insulation property, and from a magnetic material such as a ferrite which is mixed therein. In the space portions 35 and 36, the base members 35a and 36a are coated with the binders 35b and 36b, so that magnetic layers are formed on the surfaces of the base members 35a and 36a.

Accordingly, the induction heating coil 34 is structured such that the base members 35a and 36a and the binders 35b and 36b forming the magnetic-substance layers in the space portions 35 and 36 are formed integrally with the conductor wires 37a and 37b, which eliminates concerns about positional deviations and the like of them. Even in the event of the occurrence of cracking and the like in the magnetic-substance layers, over time, provided that the space portions 35 and 36 are not disengaged, such cracking and the like exert less influences on the performance, and there is stabilized synergy of the effects of the magnetic-substance layers on magnetic fluxes and the effects of the insulation property of the space portions 35 and 36 between the conductor wires 37a and 37b.

In the induction heating coil 34 according to the third embodiment, the magnetic-substance layers are formed integrally with the space portions 35 and 36 and, therefore, the magnetic-substance layers are easy to handle and can be easily wound spirally into a coil shape, thereby largely improving the workability.

Further, the structure according to the third embodiment has excellent safety as follows. That is, even if the conductor wires 37a and 37b in the induction heating coil 34 are injured at the coating applied thereto through the insulation treatment (not illustrated) with the heat-resistant varnish and the like, due to hitching and the like during assembling, this induces no problem. The space portions 35 and 36 according to the third embodiment are formed such that the magnetic material is enwrapped by the adhesive component, and the magnetic-substance layers are covered with the insulation layers. Therefore, even in the event of short circuits between the conductor wires 37a and 37b adjacent to each other, there is no concern about degradation of the safety, so that the induction heating coil has ensured safety and higher reliability.

Further, although the induction heating coil 34 according to the third embodiment has been described with respect to an example where the conductor wires 37a and 37b have been subjected, at their outer surfaces, to insulation treatment with a heat-resistant varnish and the like, it is not necessary that the conductor wires 37a and 37b have been subjected, at their outer surfaces, to insulation treatment with such a heat-resistant varnish and the like to, since the space portions 35 and 36 are provided thereon, in the structure according to the present invention. In such cases where the conductor wires 37a and 37b are not subjected at their outer surfaces to insulation treatment, it is possible to simplify the working processes, which can largely improve the workability and, also, can further reduce the fabrication cost.

Further, although the structure according to the third embodiment has been described with respect to an example where magnetic-substance layers made of a magnetic material such as a ferrite are formed in the space portions 35 and 36 in the heating coil 34, the present invention is not limited to this structure and, for example, a magnetic-substance layer made of a magnetic material such as a ferrite can be formed on each of the plurality of conductor wires 37a and 37b.

With this structure, the magnetic-substance layers made of the magnetic material such as a ferrite can be formed between the plurality of conductor wires 37a and 37b, which can reduce the high-frequency resistances induced by the skin effect and, furthermore, can reduce the high-frequency resistances caused by the proximity effect between the wires.

Further, as the structure according to the third embodiment, there has been described a structure having a gap provided between the top plate 23 and the heating coil 34 illustrated in Fig. 6 and Fig. 7, but the top plate 23 and the heating coil 34 can be placed such that they are in intimate contact with each other.

In such a case where the top plate 23 and the heating coil 34 are placed such that they are in intimate contact with each other, there is strong coupling between the heating coil 34 and the cooking container 22 to be heated, which facilitates heating and largely reduces leakages of the electromagnetic field from the heating coil 24. Furthermore, the synergy of these effects can largely increase the efficiency of heating by the heating coil 34.

Further, it is also possible to provide a heat-insulation member and the like between the top plate 23 and the heating coil 34. By providing a heat-insulation member and the like between the top plate 23 and the heating coil 34 as described above, it is possible to prevent the top plate 23 from being injured by the heating coil 34 and, further, it is possible to inhibit the heating coil 34 from being influenced by heat from the cooking container 22 to be heated, during baking and the like, thereby protecting the heating coil 34.

As described above, with the induction heating device according to the present invention, as described in the respective embodiments, it is possible to provide an induction heating coil which has largely-improved workability with a simple structure and, further, can be produced with lower costs, while reducing high-frequency resistances and, further, it is possible to provide an induction heating cooker using the same.

With the induction heating coil according to the present invention, in addition to the synergy of the magnetic-substance layers and the gaps formed in the space portions, it is possible to interchange the conductor wires, in terms of the order of them in the inward and outward direction, between the plurality of blocks of conductor wires which are juxtaposed in the horizontal direction, which can reduce high-frequency resistances caused by the proximity effect.

Further, with the present invention, it is possible to form a compact induction heating coil and, furthermore, it is possible to provide a small-sized induction heating device.

Further, with the present invention, the magnetic-substance layers can be formed such that they have smaller thicknesses and, therefore, can be easily formed by coating, printing, transfer and the like. Further, with the present invention, the magnetic material can be formed such that it can be easily bent and can be easily wound spirally into a coil shape, which enables provision of an inexpensive induction heating coil having largely-improved workability with a simple structure while being capable of reducing high-frequency resistances.

### Industrial Applicability

As described above, the induction heating coil according to the present invention can have largely-improved workability with a simple structure and, further, can be produced with lower costs, while reducing high-frequency resistances. Therefore, the induction heating coil according to the present invention can be applied to applications in all industrial fields and the like which utilize induction heating.

### Reference Signs List

- 22: Cooking container to be heated
- 23: Top plate
- 24, 34: Induction heating coil
- 26: Control portion
- 28: Coil base
- 29, 37a, 37b: Conductor wire
- 30, 31, 35, 36: Space portion
- 30a, 31a, 35a, 36a: Base member
- 30b, 31b, 35b, 36b: Binder
- 32: Temperature detection portion
- 33: Heating area
- 40: Coil portion
- 40a: Inner block
- 40b: Outer block
- 40c: Space portion

## Claims

1. An induction heating coil comprising:
a coil portion with a substantially-circular shape, which is adapted to perform induction heating on an object to be heated; and
a coil base adapted to hold the coil portion;
wherein the coil portion comprises a plurality of conductor wires which are made of a metal conductor and are wound spirally in substantially the same plane, and a space portion having at least an adhesive property and an insulation property, which is adapted to adhere and secure adjacent conductor wires of the plurality of conductor wires wound spirally so as to have a predetermined space between the adjacent conductor wires, such that the coil portion forms an integrated disk shape.

2. The induction heating coil according to Claim 1, wherein
the coil portion comprises the space portion having a magnetic-substance layer made of a magnetic material, such that the magnetic-substance layer is placed between the conductor wires adjacent to each other which are spirally wound.

3. The induction heating coil according to Claim 2, wherein
the coil portion comprises the plurality of conductor wires wound spirally in substantially the same plane and is divided into a plurality of blocks such that the plurality of blocks are placed with a space portion interposed therebetween, assuming that a single block is an area having a plurality of turns of the conductor wires, and
in the space portions between the plurality of blocks, the plurality of conductor wires electrically connecting the plurality of blocks placed in substantially the same plane are interchanged with each other, in terms of the order in an inward and outward direction.

4. The induction heating coil according to Claim 3, wherein a sensor for determining a heating condition in the object to be heated is placed, in the space portion between the plurality of blocks.

5. The induction heating coil according to any one of Claims 1 to 3, wherein
each of the conductor wires is formed by pressing a wire having a circular-shaped cross section, and the conductor wires are spirally wound such that flattened surfaces of the pressed conductor wires having a flattened cross-sectional shape are adjacent to each other.

6. The induction heating coil according to any one of Claims 1 to 3, wherein
the conductor wires have been subjected to insulation treatment at their outer surfaces.

7. The induction heating coil according to Claim 2 or 3, wherein
the magnetic-substance layer is formed on a surface of a heat-resistance base member, by performing coating, printing or transfer with a magnetic material on the heat-resistant base member.

8. An induction heating device comprising:
a top plate provided in an upper surface of a main body;
a coil portion with a substantially-circular shape, which is provided under the top plate and is adapted to perform induction heating on an object to be heated on the top plate;
a coil base adapted to hold the coil portion;
an inverter portion adapted to supply desired electric power to the coil portion; and
a control portion adapted to control the inverter portion;
wherein the coil portion comprises a plurality of conductor wires which are made of a metal conductor and are wound spirally in substantially the same plane, and a space portion having at least an adhesive property and an insulation property, which is adapted to adhere and secure adjacent conductor wires of the plurality of conductor wires wound spirally so as to have predetermined a space between the adjacent conductor wires, such that the coil portion forms an integrated disk shape.

9. The induction heating device according to Claim 8, wherein
the top plate and the coil portion are placed substantially in intimate contact with each other.

10. The induction heating device according to Claim 9, wherein
the space portion is formed by coating a base member of a heat-resistant tape type with a heat-curable resin with an insulation property as a binder to be formed in a semi-cured state, further placing the space portion formed in the semi-cured state adjacent to the plurality of conductor wires, further spirally winding the conductor wires and the space portion in substantially the same plane and, thereafter, heating the conductive wires for causing the space portion to be adhered to the conductor wires and to be cured, whereby the space portion has a thermal self-melting property.

11. The induction heating device according to Claim 9 or 10, wherein
the space portion is formed by adding a magnetic material to a binder having an adhesive property, such that the magnetic material is enwrapped by the adhesive component, whereby the space portion has a magnetic property and an insulation property.

12. An induction heating device comprising:
the induction heating coil according to any one of Claims 3 to 7;
a top plate provided in an upper surface of a main body;
an inverter portion adapted to supply desired electric power to the coil portion; and
a control portion adapted to control the inverter portion.
